(19) Europäisches Patentamt
European Patent Office
Office européen des brevets

(11) **EP 3 677 632 A1**

(12) **EUROPEAN PATENT APPLICATION**
published in accordance with Art. 153(4) EPC

(43) Date of publication:
08.07.2020 Bulletin 2020/28

(51) Int Cl.:
*C08L 9/00* (2006.01)      *B65G 15/32* (2006.01)
*C08K 3/04* (2006.01)      *C08K 3/06* (2006.01)
*C08L 7/00* (2006.01)

(21) Application number: 18851738.7

(22) Date of filing: 30.08.2018

(86) International application number:
PCT/JP2018/032087

(87) International publication number:
WO 2019/044959 (07.03.2019 Gazette 2019/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.09.2017 JP 2017168652

(71) Applicant: Bridgestone Corporation
Tokyo 104-8340 (JP)

(72) Inventor: ISHIKAWA, Tetsuya
Tokyo 104-8340 (JP)

(74) Representative: Lang, Johannes
Bardehle Pagenberg Partnerschaft mbB
Patentanwälte, Rechtsanwälte
Prinzregentenplatz 7
81675 München (DE)

(54) **RUBBER COMPOSITION, INNER PERIPHERAL COVER RUBBER, CONVEYOR BELT, AND BELT CONVEYOR**

(57) To provide a rubber composition that achieves all the durability, the energy saving capability, and the rolling dimensional stability. A rubber composition containing: a diene polymer (A); carbon black (B) containing carbon black (b-1) having a nitrogen adsorption specific surface area of more than 100 m$^2$/g and a dibutyl phthalate oil absorption of 100 to 140 mL/100 g, and carbon black (b-2) having a nitrogen adsorption specific surface area of less than 60 m$^2$/g and a dibutyl phthalate oil absorption of 110 mL/100 g or more; sulfur (C); and a vulcanization accelerator (D), a total content of the carbon black (b-1) and the carbon black (b-2) being 25 to 55 parts by mass per 100 parts by mass of the diene polymer (A), a content of the vulcanization accelerator (D) being 1.5 to 2.5 parts by mass per 100 parts by mass of the diene polymer (A), a content of sulfur (C) in terms of mass ratio with respect to the vulcanization accelerator (D) (sulfur/vulcanization accelerator) being 0.4 to 0.8.

## Description

Technical Field

The present invention relates to a rubber composition, inner peripheral cover rubber obtained by using the rubber composition, a conveyor belt using the inner peripheral cover rubber, and a belt conveyor having the conveyor belt mounted thereto.

Background Art

A belt conveyor is being used as a means for conveying various packages, such as materials and foods. Associated with the increase of the transportation amount and the enhancement of the transportation efficiency in recent years, a large-sized belt conveyor is being used, and one having an overall length reaching several kilometers is coming to use. A belt mounted to the belt conveyor (i.e., a conveyor belt) is demanded to have higher durability, and simultaneously is demanded to have a high energy saving capability from the standpoint of the reduction of the electric power consumption.

The conveyor belt generally has a core as a reinforcing member inside, and the core is held between cover rubber (which is hereinafter referred to as "outer cover rubber") on the upper side of the core (to be the outer periphery when used as a conveyor belt) and cover rubber (which is hereinafter referred to as "inner cover rubber") on the inner periphery (to be the back side or the lower side when used as a conveyor belt). The outer cover rubber and the inner cover rubber positioned on the back side thereof are different from each other in the demanded properties, and the inner cover rubber is demanded to have durability and also an energy saving capability. The use of the inner cover rubber having an excellent energy saving capability can reduce the energy loss due to the contact between the conveyor belt and a large number or rollers (i.e., can reduce the loss), thereby reduce the electric power consumption.

PTL 1 describes, as a rubber composition for a conveyor belt that achieves both the durability and the energy saving capability, a rubber composition for a conveyor belt, containing (A) 100 parts by mass of a dienic polymer, and (B) 25 to 55 parts by mass of carbon black containing carbon black (b-1) having a nitrogen adsorption specific surface area of 60 to 100 $m^2$/g and a dibutyl phthalate oil absorption of less than 110 ml/100 g, and carbon black (b-2) having a nitrogen adsorption specific surface area of less than 60 $m^2$/g and a dibutyl phthalate oil absorption of 110 ml/100 g or more.

PTL 2 describes, as a rubber composition that is excellent in the electric power saving (i.e., the energy saving capability) and flexural fatigue resistance, a rubber composition containing diene rubber containing natural rubber and butadiene rubber, and carbon black 1 and carbon black 2, in which the amount of the natural rubber is 40 to 90% by mass in the diene rubber, the amount of the butadiene rubber is 60 to 10% by mass in the diene rubber, the carbon black 1 has a nitrogen adsorption specific surface area of 60 to 100 $m^2$/g, the carbon black 1 has a dibutyl phthalate oil absorption of 120 $cm^3$/100 g or less, the carbon black 2 has a nitrogen adsorption specific surface area of 20 to 40 $m^2$/g, the carbon black 2 has a dibutyl phthalate oil absorption of 70 to 95 $cm^3$/100 g or less, and the total amount of the carbon black 1 and the carbon black 2 is 25 to 50 parts by mass per 100 parts by mass of the diene rubber.

Citation List

Patent Literatures

PTL 1:JP 2013-122018 A
PTL 2: JP 2015-224259 A

Summary of Invention

Technical Problem

However, the rubber compositions described in PTLs 1 and 2 are insufficient in dimensional stability in molding a conveyor belt by rolling (which may be hereinafter referred to as "rolling dimensional stability") in consideration of the high required quality in recent years.

Under the circumstances, an object of the present invention is to provide a rubber composition that are excellent in all the durability, the energy saving capability, and the rolling dimensional stability, and/or to provide inner peripheral cover rubber using the rubber composition, a conveyor belt, and a belt conveyor.

Solution to Problem

As a result of the earnest investigations made by the present inventors for solving the problems, it has been found that the problems can be solved by a rubber composition that contains a diene polymer and two kinds of particular carbon black in a particular ratio, contains a diene polymer and a vulcanization accelerator in a particular ratio, and contains sulfur in a particular ratio with respect to the vulcanization accelerator. The present invention has been completed based on the knowledge.

The present invention relates to the following items [1] to [14].

[1] A rubber composition containing: a diene polymer (A); carbon black (B) containing carbon black (b-1) having a nitrogen adsorption specific surface area of more than 100 $m^2$/g and a dibutyl phthalate oil absorption of 100 to 140 mL/100 g, and carbon black (b-2) having a nitrogen adsorption specific surface area of less than 60 $m^2$/g and a dibutyl phthalate oil absorption of 110 mL/100 g or more; sulfur (C); and a vulcanization accelerator (D), a total content of the carbon black (b-1) and the carbon black (b-2) being 25 to 55 parts by mass per 100 parts by mass of the diene polymer (A), a content of the vulcanization accelerator (D) being 1.5 to 2.5 parts by mass per 100 parts by mass of the diene polymer (A), a content of sulfur (C) in terms of mass ratio with respect to the vulcanization accelerator (D) (sulfur/vulcanization accelerator) being 0.4 to 0.8.

[2] The rubber composition according to the item [1], wherein a content of the sulfur (C) is 1.0 to 2.0 parts by mass per 100 parts by mass of the diene polymer (A).

[3] The rubber composition according to the item [1] or [2], wherein the carbon black (b-1) has a nitrogen adsorption specific surface area of more than 100 $m^2$/g and 116 $m^2$/g or less (and preferably from 106 to 116 $m^2$/g).

[4] The rubber composition according to any one of the items [1] to [3], wherein the carbon black (b-1) has a dibutyl phthalate oil absorption of 100 to 119 mL/100 g (and preferably from 109 to 119 mL/100 g).

[5] The rubber composition according to any one of the items [1] to [4], wherein a content ratio (b-1)/(b-2) of the carbon black (b-1) and the carbon black (b-2) in terms of mass ratio is 10/90 to 80/20 (preferably 20/80 to 60/40, and more preferably 30/70 to 50/50).

[6] The rubber composition according to any one of the items [1] to [5], wherein a content ratio (b-1)/(b-2) of the carbon black (b-1) and the carbon black (b-2) in terms of mass ratio is 10/90 to 65/35.

[7] The rubber composition according to any one of the items [1] to [6], wherein the diene polymer (A) contains substantially no styrene-butadiene rubber.

[8] The rubber composition according to any one of the items [1] to [7], wherein the diene polymer (A) contains one or more kind selected from natural rubber and isoprene rubber, and butadiene rubber, a total content of the natural rubber and the isoprene rubber is 15 to 85% by mass based on the total amount of the diene polymer (A), and a content of the butadiene rubber is 85 to 15% by mass based on the total amount of the diene polymer (A).

[9] The rubber composition according to the item [8], wherein the total content of the natural rubber and the isoprene rubber is 45 to 85% by mass (preferably 51 to 85% by mass, and more preferably 55 to 75% by mass) based on the total amount of the diene polymer (A), and the content of the butadiene rubber is 55 to 15% by mass (preferably 49 to 15% by mass, and more preferably 45 to 25% by mass) based on the total amount of the diene polymer (A).

[10] The rubber composition according to any one of the items [1] to [9], wherein a content of the sulfur (C) is 1.0 to 1.5 parts by mass per 100 parts by mass of the diene polymer (A), a content of the vulcanization accelerator (D) is 1.7 to 2.5 parts by mass per 100 parts by mass of the diene polymer (A), and a mass ratio of a content of the sulfur (C) with respect to a content of the vulcanization accelerator (D) (sulfur/vulcanization accelerator) is 0.4 to 0.6.

[11] The rubber composition according to any one of the items [1] to [10], wherein the rubber composition is for inner peripheral cover rubber of a belt conveyor.

[12] Inner peripheral cover rubber obtained from the rubber composition according to any one of the items [1] to [11].

[13] A conveyor belt including the inner peripheral cover rubber according to the item [12].

[14] A belt conveyor including the conveyor belt according to the item [13] mounted thereto.

Advantageous Effects of Invention

According to the present invention, a rubber composition that are excellent in all the durability, the energy saving capability, and the rolling dimensional stability can be provided, and by using the rubber composition, inner peripheral cover rubber, a conveyor belt, and a belt conveyor using the rubber composition that are excellent in all the durability, the energy saving capability, and the rolling dimensional stability can be provided.

Description of Embodiments

The present invention will be described in detail with reference to embodiments below. In the following description, the expression "A to B" showing a numerical range means a numerical range that includes the end points A and B. In other words, the expression means "A or more and B or less" (in the case of A < B) or "A or less and B or more" (in the case of A > B). The part by mass and the percentage % by mass are the same as a part by weight and percentage % by weight, respectively.

[Rubber Composition]

The rubber composition of the present invention contains: a diene polymer (A); carbon black (B) containing carbon black (b-1) having a nitrogen adsorption specific surface area of more than 100 $m^2$/g and a dibutyl phthalate oil absorption of 100 to 140 mL/100 g, and carbon black (b-2) having a nitrogen adsorption specific surface area of less than 60 $m^2$/g and a dibutyl phthalate oil absorption of 110 mL/100 g or more; sulfur (C); and a vulcanization accelerator (D), the total content of the carbon black (b-1) and the carbon black (b-2) is 25 to 55 parts by mass per 100 parts by mass of the diene polymer (A), the content of the vulcanization accelerator (D) is 1.5 to 2.5 parts by mass per 100 parts by mass of the diene polymer (A), and the content of sulfur (C) in terms of mass ratio with respect to the vulcanization accelerator (D) (sulfur/vulcanization accelerator) is 0.4 to 0.8. A conveyor belt obtained by using the rubber composition has the excellent durability, the excellent energy saving capability, and the excellent rolling dimensional stability in combination.
The components of the rubber composition of the present invention will be described below.
In the following description, the "diene polymer (A)" may be referred to as a "component (A)", the "carbon black (B) containing carbon black (b-1) having a nitrogen adsorption specific surface area of more than 100 $m^2$/g and a dibutyl phthalate oil absorption of 100 to 140 mL/100 g, and carbon black (b-2) having a nitrogen adsorption specific surface area of less than 60 $m^2$/g and a dibutyl phthalate oil absorption of 110 mL/100 g or more" may be referred to as a "component (B)", the "sulfur (C)" may be referred to as a "component (C)", and the "vulcanization accelerator (D)" may be referred to as a "component (D)".

(Diene Polymer (A))

Examples of the diene polymer as the component (A) include natural rubber (NR), isoprene rubber (IR), butadiene rubber (BR), styrene-butadiene rubber (SBR), ethylene-propylene rubber (EPR), ethylene-propylene-diene rubber (EPDM), butyl rubber (IIR), halogenated butyl rubber, and chloroprene rubber. These kinds of rubber may be used alone or as a combination of two or more kinds thereof. In the present invention, from the standpoint of the achievement of both the energy saving capability and the durability, it is preferred to use two or more kinds thereof in combination, it is more preferred to use at least two kinds selected from natural rubber, isoprene rubber, and butadiene rubber in combination, it is further preferred to use at least one selected from natural rubber and isoprene rubber, and butadiene rubber in combination, and it is particularly preferred to use natural rubber or isoprene rubber, and butadiene rubber in combination.
From the standpoint of the durability, the total content of the natural rubber and/or the isoprene rubber is preferably large with respect to the total amount of the component (A). From the standpoint of the energy saving capability, the content of the butadiene rubber is preferably small, and the content of styrene-butadiene rubber is preferably small, with respect to the total amount of the component (A), and it is particularly preferred that substantially no styrene-butadiene rubber is contained. The expression "substantially no" means that the intentional addition is excluded.
In the case where the diene polymer (A) contains natural rubber and/or isoprene rubber, and butadiene rubber, it is preferred that the total content of the natural rubber and/or the isoprene rubber is 15 to 85% by mass, and the content of the butadiene rubber is 85 to 15% by mass, it is more preferred that the total content of the natural rubber and/or the isoprene rubber is 45 to 85% by mass, and the content of the butadiene rubber is 55 to 15% by mass, it is further preferred that the total content of the natural rubber and/or the isoprene rubber is 51 to 85% by mass, and the content of the butadiene rubber is 49 to 15% by mass, it is particularly preferred that the total content of the natural rubber and/or the isoprene rubber is 55 to 85% by mass, and the content of the butadiene rubber is 45 to 15% by mass, and it is most preferred that the total content of the natural rubber and/or the isoprene rubber is 55 to 75% by mass, and the content of the butadiene rubber is 45 to 25% by mass, all based on the total amount of the diene polymer (A).
In the case where the content of the natural rubber and/or the isoprene rubber is 15% by mass or more, the natural rubber and/or isoprene rubber form the sea of the sea-island structure, which provides good fracture characteristics, resulting in the enhancement of the durability. In the case where the content of butadiene rubber is at least 15% by mass, the energy saving capability can be enhanced.
The butadiene rubber is preferably high-cis butadiene rubber from the standpoint of the achievement of both the durability and the energy saving capability. The high-cis butadiene rubber herein means high-cis butadiene rubber that has a cis-1,4 bond content in the 1,3-butadiene units therein of 90% or more and less than 98% in the measurement by FT-IR. The cis-1,4 bond content in the 1,3-butadiene units in the high-cis butadiene rubber is preferably 95% or more and less than 98%. The production method of the high-cis butadiene rubber is not particularly limited, and the rubber may be produced by a known method. For example, the rubber may be produced through polymerization of butadiene by using a neodymium catalyst. The high-cis butadiene rubber is commercially available, and for example, "BR01", "T700", and the like, produced by JSR Corporation, may be used.

(Carbon Black (B))

From the standpoint of the achievement of both the energy saving capability and the rolling dimensional stability, the carbon black as the component (B) contains carbon black (b-1) having a nitrogen adsorption specific surface area of more than 100 m$^2$/g and a dibutyl phthalate oil absorption of 100 to 140 mL/100 g, and carbon black (b-2) having a nitrogen adsorption specific surface area of less than 60 m$^2$/g and a dibutyl phthalate oil absorption of 110 mL/100 g or more, which are used in combination. The dibutyl phthalate oil absorption may be hereinafter referred to as a "DBP oil absorption".

From the standpoint of the rolling dimensional stability, the carbon black as the component (b-1) satisfies the two conditions, i.e., a nitrogen adsorption specific surface area of more than 100 m$^2$/g and a dibutyl phthalate oil absorption of 100 to 140 mL/100 g. From the standpoint of the rolling dimensional stability, furthermore, the carbon black as the component (b-1) in the present invention preferably satisfies a nitrogen adsorption specific surface area of more than 100 m$^2$/g and 116 m$^2$/g or less and a dibutyl phthalate oil absorption of 100 to 119 mL/100 g, and more preferably satisfies a nitrogen adsorption specific surface area of 106 to 116 m$^2$/g and a dibutyl phthalate oil absorption of 109 to 119 mL/100 g.

It is estimated that the component (b-1) particularly has a large surface area with respect to the particle diameter and thus readily undergoes interaction with the rubber component in vulcanization, as compared to carbon black having a small surface area with respect to the particle diameter, and consequently the dimensional stability in molding by rolling can be obtained.

From the standpoint of the energy saving capability, the carbon black as the component (b-2) in the present invention satisfies the two conditions, i.e., a nitrogen adsorption specific surface area of less than 60 m$^2$/g and a dibutyl phthalate oil absorption of 110 mL/100 g or more. The carbon black as the component (b-2) in the present invention preferably satisfies a nitrogen adsorption specific surface area of 30 m$^2$/g to 60 m$^2$/g and a dibutyl phthalate oil absorption of 110 to 140 mL/100 g, and more preferably satisfies a nitrogen adsorption specific surface area of 35 to 45 m$^2$/g and a DBP oil absorption of 116 to 126 mL/100 g.

In the description herein, the nitrogen adsorption specific surface area and the dibutyl phthalate oil absorption of the carbon black are values that are measured according to JIS K6217 (1997).

The content ratio ((b-1)/(b-2)) of the component (b-1) and the component (b-2) in terms of mass ratio is preferably 10/90 to 80/20, more preferably 20/80 to 60/40, and further preferably 30/70 to 50/50.

In the case where the content ratio of the component (b-1) is 10% by mass or more with respect to the total of the component (b-1) and the component (b-2), the rolling dimensional stability can be enhanced.

In the case where the content ratio of the component (b-2) is 20% by mass or more with respect to the total of the component (b-1) and the component (b-2), the energy saving capability can be enhanced.

The carbon black may be produced by any method of a furnace method, a channel method, an acetylene method, a thermal method, and the like, and carbon black produced by a furnace method is particularly preferred. Specific examples of the carbon black include the standard species including SAF, ISAF, HAF, FEF, GPF, and SRF (all of which are furnace black for rubber), and MT carbon black (pyrolytic carbon). Among these, ISAF, SAF, and FEF are preferred. The carbon black that satisfies the aforementioned requirements may be appropriately selected from these species and used.

The total content of the component (b-1) and the component (b-2) is 25 to 55 parts by mass, preferably 25 to 50 parts by mass, more preferably 30 to 50 parts by mass, and further preferably 35 to 50 parts by mass, per 100 parts by mass of the component (A). With the total content of less than 25 parts by mass, the durability becomes poor. With the total content exceeding 55 parts by mass, on the other hand, the durability becomes poor, and the energy saving capability is insufficient.

The rubber composition of the present invention may contain carbon black (b-3) that does not correspond to the component (b-1) and the component (b-2). The content of the component (b-3) is preferably 10 parts by mass or less, more preferably 5 parts by mass or less, further preferably 3 parts by mass or less, and particularly preferably 1 part by mass or less, per 100 parts by mass of the component (A).

((C) Sulfur)

The sulfur as the component (C) is not particularly limited, and examples thereof include powdered sulfur, precipitated sulfur, highly dispersed sulfur, surface-treated sulfur, insoluble sulfur, dimorpholine disulfide, and alkylphenol disulfide. These compounds may be used alone or as a combination of two or more kinds thereof.

The content of the component (C) is preferably 1.0 to 2.0 parts by mass, and more preferably 1.0 to 1.5 parts by mass, per 100 parts by mass of the component (A).

In the case where the content of the component (C) is 1.0 part by mass or more, the energy saving capability can be improved.

In the case where the content of the component (C) is 2.0 parts by mass or less, the durability can be improved.

((D) Vulcanization Accelerator)

The vulcanization accelerator as the component (D) is not particularly limited, and examples thereof include vulcanization accelerators of an aldehyde-ammonia series, a guanidine series, a thiourea series, a thiazole series, a sulfenamide series, a thiuram series, and a dithiocarbamate salt series. Among these, the sulfenamide series vulcanization accelerator is preferred.

Specific examples of the aldehyde-ammonia series vulcanization accelerator include hexamethylene triamine.

Specific examples of the guanidine series vulcanization accelerator include diphenylguanidine.

Specific examples of the thiourea series vulcanization accelerator include ethylene thiourea.

Specific examples of the thiazole series vulcanization accelerator include dibenzothiazyl disulfide (DM), and 2-mercaptobenzothiazole and a Zn salt thereof.

Specific examples of the sulfenamide series vulcanization accelerator include N-cyclohexyl-2-benzothiazolylsulfenamide (CZ) and N-t-butyl-2-benzothiazolylsulfenamide (NS).

Specific examples of the thiuram series vulcanization accelerator include tetramethylthiuram disulfide (TMTD) and dipentamethylene thiuram tetrasulfide.

Specific examples of the dithiocarbamate salt series vulcanization accelerator include Na dimethyldithiocarbamate, Zn dimethyldithiocarbamate, Te diethyldithiocarbamate, Cu dimethyldithiocarbamate, Fe dimethyldithiocarbamate, and pipecoline pipecolyl dithiocarbamate.

The vulcanization accelerator may be used alone or as a combination of two or more kinds thereof.

The content of the component (D) is 1.5 to 2.5 parts by mass, preferably 1.6 to 2.5 parts by mass, and more preferably 1.7 to 2.5 parts by mass, per 100 parts by mass of the component (A).

In the case where the content of the component (D) is less than 1.5 parts by mass, a sufficient energy saving capability cannot be obtained.

In the case where the content of the component (D) exceeds 2.5 parts by mass, a sufficient durability cannot be obtained.

(Content Ratio of Component (C) with respect to Component (D))

In the rubber composition of the present invention, the content ratio of the sulfur (C) in terms of mass ratio (sulfur/vulcanization accelerator) with respect to the vulcanization accelerator (D) is 0.4 to 0.8, preferably 0.4 to 0.7, and more preferably 0.4 to 0.6.

In the case where the content ratio of the mass ratio (sulfur/vulcanization accelerator) is in the range, the rubber composition becomes hard to enhance the energy saving capability, and both the durability and the energy saving capability can be achieved to a high level.

In the case where the mass ratio (sulfur/vulcanization accelerator) is less than 0.4, a sufficient durability cannot be obtained.

In the case where the mass ratio (sulfur/vulcanization accelerator) exceeds 0.8, a sufficient energy saving capability cannot be obtained.

(Additional Components)

An additional additive may be further added to the rubber composition of the present invention in such a range that does not significantly impair the effects of the present invention. The additives are not particularly limited, as far as the additives are generally contained in cover rubber of a conveyor belt. Examples of the additives include a fatty acid such as stearic acid, zinc oxide (zinc flower), an antiaging agent, a vulcanization retardant (scorching inhibitor), an oil, a resin, wax, silica, a silica coupling agent, a peptizing agent, an ozone cracking inhibitor, an antioxidant, clay, and calcium carbonate. These materials used may be commercial products.

In the case where a fatty acid is used, the amount thereof is preferably 0.1 to 10 parts by mass, and more preferably 1 to 5 parts by mass, per 100 parts by mass of the component (A).

In the case where zinc oxide is used, the amount thereof is preferably 0.5 to 10 parts by mass, and more preferably 1 to 5 parts by mass, per 100 parts by mass of the component (A).

As the antiaging agent, a known antiaging agent may be selected and used. Examples thereof include N-phenyl-N'-(1,3-dimethylbutyl)-p-phenylenediamine (6C), N-phenyl-N'-isopropyl-p-phenylenediamine (3C), and 2,2,4-trimethyl-1,2-dihydroquinoline polymer (RD). In case where antiaging agent is used, the amount thereof is preferably 0.1 to 10 parts by mass, more preferably 0.5 to 5 parts by mass, and further preferably from 1 to 5 parts by mass, per 100 parts by mass of the component (A).

The amounts of the other additional additives may be appropriately selected by one skilled in the art in such a range that does not impair the objects of the present invention.

[Method for producing Rubber Composition]

The rubber composition of the present invention may be obtained by kneading the components (A) to (D) along with appropriately necessary additives. The kneading method may be in accordance with a method that is ordinarily performed by one skilled in the art. Preferred examples of the method include a method, in which all the components except for sulfur and a vulcanization accelerator are kneaded by using a mixing machine, such as a Banbury mixer, a Brabender mixer, a kneader, or a high-shear mixer, at from 80 to 200°C (preferably from 100 to 180°C) (A-stage kneading), and then sulfur and a vulcanization accelerator are added thereto and further kneaded with a kneading roll machine or the like at from 80 to 200°C (preferably from 100 to 180°C) (B-stage kneading), and a method, in which all the components are kneaded at one time by using the aforementioned kneader at from 80 to 200°C (preferably from 100 to 180°C).

[Applications of Rubber Composition]

The rubber composition thus obtained may be molded with a heating mold to provide a conveyor belt (i.e., outer cover rubber and inner cover rubber). In general, outer cover rubber and inner cover rubber are made to hold a core as a reinforcing member to make a conveyor belt, which is mounted to a belt conveyor.

The rubber composition of the present invention has the durability, the energy saving capability, and the dimensional stability in combination, and thus is useful particularly as inner cover rubber of a conveyor belt.

Examples

The present invention will be described in more detail with reference to examples below, but the present invention is not limited to the examples. In the description below, the expressions "%" and "part" mean "% by mass" and "part by mass" respectively unless otherwise indicated. The expressions for the added amounts in the table are all in "part by mass".

[Examples 1 to 10 and Comparative Examples 1 to 9]

All the components except for sulfur and the vulcanization accelerator were kneaded at the mixing amounts (unit: part by mass) shown in Table 1 by using a Banbury mixer (A-stage kneading), and then after adding sulfur and the vulcanization accelerator thereto, further kneaded (B-stage kneading) to provide a rubber composition.

(Energy Saving Capability - Index of Low Hysteresis Loss)

The rubber compositions obtained in the examples in Table 1 each were vulcanized at a mold temperature of 160°C for 15 minutes to provide a sheet having a thickness of 2 mm, a length of 40 mm, and a width of 5 mm, which was evaluated for the energy saving capability according to the following manner (Loss index in Tables 1 and 2).

A dynamic viscoelasticity measurement was performed with a viscoelasticity spectrometer (produced by Toyo Seiki Seisakusho Co., Ltd.) under measurement conditions of a chuck distance of 10 mm, a dynamic strain of 2%, and a frequency of 10 Hz, so as to measure the loss tangent ($\tan\delta$) at 20°C. Assuming that the dynamic elastic modulus was referred to as E' (N/mm), the value of $\tan\delta/E'^{0.32}$ was obtained and designated as the index of the low hysteresis loss.

(Tensile Strength (Tb) - Index of Durability)

The rubber compositions obtained in the examples in Table 1 each were vulcanized at a mold temperature of 160°C for 15 minutes to provide a No. 3 dumbbell specimen having a thickness of 2 mm, which was evaluated for the durability according to the following manner.

The tensile strength (Tb, unit: kN) was measured according to JIS K6251 and designated as the index of the durability.

The rubber compositions obtained in the examples in Table 1 each were rolled into a sheet by using a mill roll, and evaluated for the rolling dimensional stability according to the following manner.

(Dimensional Stability Rate of Rubber: Index of Rolling Dimensional Stability)

The length of the long side of the rubber sheet wrapping around the roll during rolling and the length of the long side of the rubber sheet after mill shrinkage after cutting from the roll each were measured. The dimensional stability rate of the rubber sheet on the long side was obtained according to the following expression. A larger value for the dimensional stability rate means better rolling dimensional stability.

$$\text{Dimensional stability rate of rubber (\%)} = ((\text{length of long side after rolling})/(\text{length of long side during rolling})) \times 100$$

The results are shown in Tables 1 and 2.

Table 1

| Component | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| | (A) | NR [1] | 30 | 80 | 55 | 55 | 20 | 90 | 55 | 55 | 55 | 55 |
| | | BR [2] | 70 | 20 | 45 | 45 | 80 | 10 | 45 | 45 | 25 | 45 |
| | | SBR [3] | 0 | 0 | 0 | 0 | 0 | 0 | 0 | 0 | 20 | 0 |
| | (B) | Carbon black 1 [4] | 15 (37.5%) | 15 (37.5%) | 4 (10%) | 15 (37.5%) | 15 (37.5%) | 15 (37.5%) | 15 (37.5%) | 30 (75%) | 15 (37.5%) | 15 (37.5%) |
| | | Carbon black 2 [5] | 25 (62.5%) | 25 (62.5%) | 36 (90%) | 25 (62.5%) | 25 (62.5%) | 25 (62.5%) | 25 (62.5%) | 10 (25%) | 25 (62.5%) | 25 (62.5%) |
| | | Carbon black 3 [6] | 0 | 0 | 0 | 0 | 0 | 0 | 0 | 0 | 0 | 0 |
| | (C) | Sulfur [7] | 1.2 | 1.2 | 1.2 | 1.2 | 1.2 | 1.2 | 1.2 | 1.2 | 1.2 | 1.0 |
| | (D) | Accelerator [8] | 2 | 2 | 2 | 1.6 | 2 | 2 | 2 | 2 | 2 | 2.5 |
| | Sulfur/Accelerator | | 0.6 | 0.6 | 0.6 | 0.75 | 0.6 | 0.6 | 0.6 | 0.6 | 0.6 | 0.4 |
| Tb (Index of durability, unit: kN) | | | 18.2 | 22.0 | 18.0 | 20.0 | 17.7 | 22.5 | 19.9 | 20.7 | 21.2 | 19.0 |
| Loss index (Index of energy saving capability) | | | 0.070 | 0.081 | 0.069 | 0.080 | 0.068 | 0.085 | 0.074 | 0.084 | 0.082 | 0.072 |
| Dimensional stability rate (Index of dimensional stability) | | | 74 | 71 | 71 | 74 | 75 | 70 | 73 | 75 | 78 | 73 |

Table 2

| Component | | | Comparative Example | | | | | | | | |
|---|---|---|---|---|---|---|---|---|---|---|---|
| | | | 1 | 2 | 3 | 4 | 5 | 6 | 7 | 8 | 9 |
| (A) | | NR [1] | 55 | 55 | 55 | 55 | 55 | 55 | 55 | 55 | 55 |
| | | BR [2] | 45 | 45 | 45 | 45 | 45 | 45 | 45 | 45 | 45 |
| | | SBR [3] | 0 | 0 | 0 | 0 | 0 | 0 | 0 | 0 | 0 |
| (B) | | Carbon black 1 [4] | 15 (37.5%) | 40 | 0 | 15 (37.5%) | 15 (37.5%) | 15 (37.5%) | 15 (37.5%) | 0 | 15 (37.5%) |
| | | Carbon black 2 [5] | 25 (62.5%) | 0 | 40 | 25 (62.5%) | 25 (62.5%) | 25 (62.5%) | 25 (62.5%) | 10 (25%) | 25 (62.5%) |
| | | Carbon black 3 [6] | 0 | 0 | 0 | 0 | 0 | 0 | 0 | 30 (75%) | 0 |
| (C) | | Sulfur [7] | 1.2 | 1.2 | 1.2 | 1.2 | 1.6 | 1.6 | 2 | 1.2 | 0.6 |
| (D) | | Accelerator [8] | 1 | 2 | 2 | 3 | 1.6 | 3 | 3 | 2 | 2 |
| Sulfur/Accelerator | | | 1.2 | 0.6 | 0.6 | 0.4 | 1 | 0.53 | 0.67 | 0.6 | 0.3 |
| Tb (Index of durability, unit: kN) | | | 21.0 | 21.0 | 17.5 | 16.8 | 16.8 | 15.3 | 14.9 | 22.5 | 17.0 |
| Loss index (Index of energy saving capability) | | | 0.090 | 0.088 | 0.068 | 0.070 | 0.071 | 0.065 | 0.060 | 0.095 | 0.084 |
| Dimensional stability rate (Index of dimensional stability) | | | 74 | 76 | 69 | 74 | 74 | 74 | 74 | 80 | 73 |

The components in Tables 1 and 2 will be described in detail below.

1) Natural rubber, grade: RSS-3
2) Butadiene rubber (the amount of cis-1,4 bonds in 1,3-butadiene units is 97%), "BR150L" (trade name), produced by Ube Industries, Ltd.
3) Styrene butadiene rubber, "JSR 1500" (trade name), produced by JSR Corporation
4) "Shoblack N220" (trade name) (ISAF), produced by Cabot Japan K.K., nitrogen adsorption specific surface area: 111 m$^2$/g, dibutyl phthalate oil absorption: 115 mL/100 g, component (b-1)
5) "Shoblack N550" (trade name) (FEF), produced by Cabot Japan K.K., nitrogen adsorption specific surface area: 42 m$^2$/g, dibutyl phthalate oil absorption: 115 mL/100 g, component (b-2)
6) "Shoblack N110" (trade name) (SAF), produced by Cabot Japan K.K., nitrogen adsorption specific surface area: 140 m$^2$/g, dibutyl phthalate oil absorption: 154 mL/100 g, neither component (b-1) nor component (b-2)
7) "60% Insoluble Sulfur" (trade name), produced by Nippon Kanryu Industry Co., Ltd.
8) "Nocceler NS-F" (trade name), produced by Ouchi Shinko Chemical Industrial Co., Ltd.

It is understood from Table 1 that the rubber composition of the present invention is excellent in all the durability, the energy saving capability, and the rolling dimensional stability.
As shown by Comparative Examples 1 and 5, in the case where the ratio (sulfur/vulcanization accelerator) exceeds 0.8, in particular, both the durability and the energy saving capability cannot be achieved. As shown by Comparative Example 1, in the case where the ratio (sulfur/vulcanization accelerator) exceeds 0.8, the energy saving capability is lowered.
As shown by Comparative Example 2, in the case where the component (b-2) is not contained, the energy saving capability is lowered.
As shown by Comparative Example 3, in the case where the component (b-1) is not contained, the rolling dimensional stability is lowered.
As shown by Comparative Examples 4, 6, and 7, in the case where the component (D) is excessively contained, the durability is lowered.
As shown by Comparative Example 5, in the case where the ratio (sulfur/vulcanization accelerator) exceeds 0.8, the durability is lowered.
As shown by Comparative Example 8, in the case where the component (b-1) is not contained, and the other carbon black is contained, the energy saving capability is lowered.
As shown by Comparative Example 9, in the case where the ratio (sulfur/vulcanization accelerator) is less than 0.4, the durability is lowered.

Industrial Applicability

The rubber composition of the present invention is excellent in all the durability, the energy saving capability, and the rolling dimensional stability, and can be favorably applied to the purpose of a conveyor belt, particularly an inner cover belt of a conveyor belt.

Claims

1. A rubber composition comprising:

a diene polymer (A);
carbon black (B) containing carbon black (b-1) having a nitrogen adsorption specific surface area of more than 100 m$^2$/g and a dibutyl phthalate oil absorption of 100 to 140 mL/100 g, and carbon black (b-2) having a nitrogen adsorption specific surface area of less than 60 m$^2$/g and a dibutyl phthalate oil absorption of 110 mL/100 g or more;
sulfur (C); and
a vulcanization accelerator (D),
a total content of the carbon black (b-1) and the carbon black (b-2) being 25 to 55 parts by mass per 100 parts by mass of the diene polymer (A),
a content of the vulcanization accelerator (D) being 1.5 to 2.5 parts by mass per 100 parts by mass of the diene polymer (A),
a content of sulfur (C) in terms of mass ratio with respect to the vulcanization accelerator (D) (sulfur/vulcanization accelerator) being 0.4 to 0.8.

2.  The rubber composition according to claim 1, wherein a content of the sulfur (C) is 1.0 to 2.0 parts by mass per 100 parts by mass of the diene polymer (A).

3.  The rubber composition according to claim 1 or 2, wherein the carbon black (b-1) has a nitrogen adsorption specific surface area of more than 100 m²/g and 116 m²/g or less.

4.  The rubber composition according to any one of claims 1 to 3, wherein the carbon black (b-1) has a dibutyl phthalate oil absorption of 100 to 119 mL/100 g.

5.  The rubber composition according to any one of claims 1 to 4, wherein a content ratio (b-1)/(b-2) of the carbon black (b-1) and the carbon black (b-2) in terms of mass ratio is 10/90 to 80/20.

6.  The rubber composition according to any one of claims 1 to 5, wherein a content ratio (b-1)/(b-2) of the carbon black (b-1) and the carbon black (b-2) in terms of mass ratio is 10/90 to 65/35.

7.  The rubber composition according to any one of claims 1 to 6, wherein the diene polymer (A) contains substantially no styrene-butadiene rubber.

8.  The rubber composition according to any one of claims 1 to 7, wherein
the diene polymer (A) contains one or more kind selected from natural rubber and isoprene rubber, and butadiene rubber,
a total content of the natural rubber and the isoprene rubber is 15 to 85% by mass based on the total amount of the diene polymer (A), and
a content of the butadiene rubber is 85 to 15% by mass based on the total amount of the diene polymer (A).

9.  The rubber composition according to claim 8, wherein
the total content of the natural rubber and the isoprene rubber is 45 to 85% by mass based on the total amount of the diene polymer (A), and
the content of the butadiene rubber is 55 to 15% by mass based on the total amount of the diene polymer (A).

10. The rubber composition according to any one of claims 1 to 9, wherein
a content of the sulfur (C) is 1.0 to 1.5 parts by mass per 100 parts by mass of the diene polymer (A),
a content of the vulcanization accelerator (D) is 1.7 to 2.5 parts by mass per 100 parts by mass of the diene polymer (A), and
a mass ratio of a content of the sulfur (C) with respect to a content of the vulcanization accelerator (D) (sulfur/vulcanization accelerator) is 0.4 to 0.6.

11. The rubber composition according to any one of claims 1 to 10, wherein the rubber composition is for inner peripheral cover rubber of a belt conveyor.

12. Inner peripheral cover rubber obtained from the rubber composition according to any one of claims 1 to 11.

13. A conveyor belt comprising the inner peripheral cover rubber according to claim 12.

14. A belt conveyor comprising the conveyor belt according to claim 13 mounted thereto.

## INTERNATIONAL SEARCH REPORT

| International application No. |
|---|
| PCT/JP2018/032087 |

**A. CLASSIFICATION OF SUBJECT MATTER**
Int.Cl. C08L9/00(2006.01)i, B65G15/32(2006.01)i, C08K3/04(2006.01)i, C08K3/06(2006.01)i, C08L7/00(2006.01)i

According to International Patent Classification (IPC) or to both national classification and IPC

**B. FIELDS SEARCHED**

Minimum documentation searched (classification system followed by classification symbols)
Int.Cl. C08L1/00-101/14, C08K3/00-13/08, B65G15/30-15/58

Documentation searched other than minimum documentation to the extent that such documents are included in the fields searched
Published examined utility model applications of Japan    1922–1996
Published unexamined utility model applications of Japan    1971–2018
Registered utility model specifications of Japan    1996–2018
Published registered utility model applications of Japan    1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/145843 A1 (SUMITOMO RUBBER INDUSTRIES, LTD.) 01 October 2015, entire text & US 2017/0015812 A1, entire text & EP 3118250 A1 & CN 106133047 A | 1–14 |
| A | JP 2015-129224 A (SUMITOMO RUBBER INDUSTRIES, LTD.) 16 July 2015, entire text (Family: none) | 1–14 |
| A | JP 2013-237337 A (SUMITOMO RUBBER INDUSTRIES, LTD.) 28 November 2013, entire text (Family: none) | 1–14 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19.10.2018 | 30.10.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 677 632 A1**

## INTERNATIONAL SEARCH REPORT

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-101666 A (SUMITOMO RUBBER INDUSTRIES, LTD.) 04 June 2015, entire text (Family: none) | 1-14 |
| A | JP 2013-122018 A (BRIDGESTONE CORPORATION) 20 June 2013, entire text & US 2015/0001047 A1, entire text & WO 2013/089069 A1 & EP 2792709 A1 & CN 104114631 A | 1-14 |
| A | JP 2015-224259 A (YOKOHAMA RUBBER CO., LTD.) 14 December 2015, entire text & US 2017/0197789 A1, entire text & WO 2015/182499 A1 & CN 106414582 A | 1-14 |
| A | JP 2015-101656 A (SUMITOMO RUBBER INDUSTRIES, LTD.) 04 June 2015, entire text (Family: none) | 1-14 |
| P, A | WO 2018/012325 A1 (BRIDGESTONE CORPORATION) 18 January 2018, entire text (Family: none) | 1-14 |
| P, A | JP 2018-009061 A (BRIDGESTONE CORPORATION) 18 January 2018, entire text (Family: none) | 1-14 |

Form PCT/ISA/210 (continuation of second sheet) (January 2015)

**EP 3 677 632 A1**

## REFERENCES CITED IN THE DESCRIPTION

### Patent documents cited in the description

- JP 2013122018 A
- JP 2015224259 A